# EUROPEAN PATENT SPECIFICATION

(11) **EP 3 425 317 B1**
(45) Date of publication and mention of the grant of the patent: **08.04.2020**
(21) Application number: 17179853.1
(22) Date of filing: 05.07.2017
(51) Int. Cl.: F27D 5/00, B28B 11/24

(54) **CERAMIC ASSEMBLY FOR FIRING CERAMIC OBJECTS**
KERAMIKANORDNUNG ZUM BRENNEN VON KERAMISCHEN GEGENSTÄNDEN
ENSEMBLE CÉRAMIQUE POUR LA CUISSON D'OBJETS EN CÉRAMIQUE

(43) Date of publication of application: 09.01.2019
(73) Proprietor: IMERTECH SAS, 75015 Paris (FR)
(72) Inventor: KISS, Sandor, 6800 Hódmezövásárhely (HU); KONKOLY, Ferenc, 6800 Hódmezövásárhely (HU)
(74) Representative: Haseltine Lake Kempner LLP

(56) References cited:
- WO-A1-2007/132276
- FR-A1- 2 296 156
- JP-U- S 635 396
- US-A- 6 142 774

## Description

### FIELD OF THE INVENTION

The present invention relates to ceramic assemblies for supporting objects to be fired in a kiln and the use of ceramic assemblies in firing objects to be fired. The present invention further relates to a method of forming a ceramic assembly and kits of parts for assembling a ceramic assembly.

### BACKGROUND OF THE INVENTION

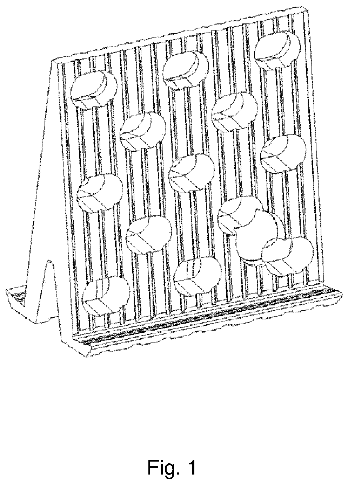

Kiln furniture is widely used to support ceramic objects for firing in a kiln. The appropriate kiln furniture is selected to support the particular ceramic object to be fired. For large flat objects, such as ceramic shower trays, supporting kiln furniture is required to ensure that these objects remain flat. Various kiln furniture used for such an application can either require the ceramic object to be loaded in a horizontal position or in a vertical position. Kiln furniture to support the ceramic object in a vertical position are known in the art to be cast from a monoblock, as seen in Figure 1. Such objects may be heavy leading to difficulties in handling and increasing the cost of firing.

CN205843390U discloses a car kiln, wherein the supporting column is a quadrangular pyramid made up of a single piece. Although the supporting structure is hollow, disadvantages remain with the use such a structure as kiln furniture. Due to the single large object the thermal shock resistance is low and cracks can appear readily leading to a possible collapse of the structure. There is little if no chance of repairing such a structure if the surface is deformed or damaged. When considering the firing process, such a supporting structure is inflexible and is suitable for a particular size of object. A support made from a single piece is not intended to be adapted to accomodate objects of various sizes and is therefore limited to a single size and weight. US6142774, JPS635396 and FR2296156 also disclose a ceramic assembly for supporting objects to be fired in a kiln.

It is therefore desirable to provide alternative or improved kiln furniture. In particular, it is desirable to provide an adaptable ceramic assembly for supporting objects to be fired in a kiln.

### SUMMARY OF THE INVENTION

The present invention is defined in the appended claims.

In accordance with a first aspect, there is provided a ceramic assembly (1) for supporting objects to be fired in a kiln comprising a central support (2) and one or more removable batts (3) securable onto the central support (2) wherein the central support (2) comprises support elements (4) and connecting elements (5), wherein the support element (4) is a trapezoid shape and wherein the connecting elements (5) comprise elongated elements, such as bars.

In accordance with a second aspect, there is provided the use of a ceramic assembly according to the first aspect in firing objects to be fired.

In accordance with a third aspect, there is provided a method of formation of a ceramic assembly for supporting objects to be fired in a kiln, comprising the steps of assembling a central support (2) and securing one or more removable batts (3) onto the central support (2) according to the first aspect.

In accordance with a fourth aspect, there is provided a kit of parts for assembling a ceramic assembly (1) for supporting objects to be fired in a kiln comprising a central support (2) and one or more removable batts (3), and optionally H-profile beams (6) and/or feet (7) as defined the first aspect.

Certain embodiments of the present invention may provide one or more of the following advantages:
- desired weight of assembly;
- desired support provided by assembly;
- desired adaptability of assembly to accommodate different sizes of objects to be fired, especially larger objects to be fired.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### BRIEF DESCRIPTION OF THE DRAWINGS

The invention will further be illustrated by reference to the following figures:
- Fig. 1: shows a simplified perspective of a supporting kiln furniture according to the state of the art;
- Fig. 2: shows a schematic representation of the front view of a first ceramic assembly according to one embodiment of the present invention;
- Fig. 3a: shows a schematic representation of the front view of a second ceramic assembly according to the one embodiment of the present invention;
- Fig. 3b: shows a schematic representation of the bottom view of the ceramic assembly of Fig. 3a; and
- Fig. 3c: shows a schematic representation of an assembly of Fig. 3a and Fig. 3b in a partially assembled state.

It is understood that the following description and references to the figures concern exemplary embodiments of the present invention and shall not be limiting the scope of the claims.

### DETAILED DESCRIPTION

The present invention provides ceramic assemblies to support objects to be fired in a kiln according to the appended claims. The ceramic assemblies comprise a central support and one or more removable batts securable onto the central support. The parts of the ceramic assembly are put together to form a ceramic assembly for supporting objects to be fired in a kiln. The ceramic assembly may be used in different configurations and/or different parts, leading to ceramic assemblies with different sizes and weights. Each part of the ceramic assembly may be reused. After the ceramic assembly is used in firing objects in a kiln, it may be disassembles into its parts. The parts may then be used to construct further ceramic assembles for supporting objects to be fired in a kiln. If at any time there is damage to a part, the part in question can be replaced and used with the remaining parts.

In the claimed embodiment, the central support comprises support elements and connecting elements. In certain embodiments the support element may be wider at the bottom and narrower at the top. The support element may be symmetrical. In the claimed embodiment, the support elements is a trapezoid shape. The trapezoid shape may be wider at the bottom and narrower at the top, such as an acute trapezoid, an isosceles trapezoid or a 3-sides equal trapezoid. The trapezoid shape may be symmetrical.

For example, the support element may have a height of about 600 mm, or about 700 mm, or about 800 mm, or about 900 mm, or about 1000 mm, or about 1100 mm, or about 1200 mm, or about 1300 mm, or about 1400 mm, or about 1500 mm. The support element may have a width at the bottom of about 150 mm, or about 200 mm, or about 300 mm or about 400 mm or about 500 mm, or about 600 mm. The support element may have a width at the top of about 70 mm, or about 80 mm, or about 90 mm, or about 100 mm, or about 110 mm, or about 120 mm, or about 130 mm, or about 140 mm, or about 150 mm or about 160 mm, or about 170 mm, or about 180 mm, or about 190 mm, or about 200 mm. The support element may have a thickness of about 7 mm, to about 10 mm to about 12 mm, to about 15 mm, to about 17mm to about 20 mm, to about 25 mm, to about 30 mm, to about 35 mm, to about 35 mm, to about 40 mm, to about 45 mm, to about 50 mm. The thickness of the support element may depend on the material used for the support element.

The support element may be a solid structure, or it may be a hollow structure comprising gaps in the ceramic structure. Such gaps may reduce the weight of the support element, whilst maintaining structural integrity.

The central support comprises support elements. In certain embodiments two or more support elements are used. In certain embodiments three or four or five or six support elements are used. In certain embodiments two or more support elements are arranged parallel to one another.

In certain embodiments the support element may further comprise holes. These additional holes may be used to hold ceramic nuts.

In certain embodiments the support element may be shaped to fit further elements to the bottom and top of the central support. For example, the support element may be grooved to fit a profile beam. In certain embodiments the support element is supported by one more profile beams. The support element may slot into and be supported by one or more profile beams

In certain embodiments the support elements are connected to one another using one or more connecting elements. In certain embodiments, two or three or four or five or six or seven or eight connecting elements are used. In certain embodiments the connecting elements are slotted through holes in the support element. Such holes may be tailored to fit the type of connecting element used. The connecting elements may run horizontally. In certain embodiments one or more of the connecting elements may be approximately perpendicular to one or more of the support elements and/or approximately parallel to the floor. For example, the connecting elements are arranged at an angle from about 70° to about 110°, or from about 80° to about 100°, or about 90° with respect to one or more of the support elements.

In the claimed embodiment the connecting element is an elongated element, which may have a constant cross-section and have a regular or irregular geometric shape, such as round, triangular, square, rectangular or hexagonal. The elongated element may be an H-profile beam, a U-profile beam, an I-profile beam, an L-profile beam or a combination thereof. In certain embodiments, the connecting elements used in a single central support may have different cross-sections.

For example, the connecting elements may have a height of about 25 mm, or of about 30 mm, or of about 35 mm, or of about 40 mm, or of about 45 mm, or of about 50 mm, or of about 55 mm, or of about 60 mm. The connecting element may have a width of about 25 mm, or of about 30 mm, or of about 35 mm, or of about 40 mm, or of about 45 mm, or of about 50 mm, or of about 55 mm, or of about 60 mm, or of about 65 mm, or of about 70 mm, or of about 75 mm, or of about 80 mm. The connecting element may have a length of about 800 mm, or of about 1000 mm, or of about 1200 mm, or of about 1400 mm, or of about 1600 mm, or of about 1800 mm, or of about 2000 mm, or of about 2200 mm, or of about 2400 mm, to about 2600 mm.

As used herein "removable batts" refers to batts that can be secured to the central support and removed from the central support before or after firing. The removable batts may be reused and secured to the central support in different positions. For example, the removable batts may be secured to the central support in a horizontal orientation. As used herein, a "horizontal orientation" when referring to the removable batts means that the longer side of the removal batt is approximately parallel to the floor. The removable batts may be secured to the central support in a vertical orientation. As used herein, a "vertical orientation" when referring to the removable batts means that the shorter side of the removal batt is approximately parallel to the floor. In certain embodiments, one or more removable batts may be secured to the central support in a vertical orientation and one or more removable batts may be secured to the central support in a horizontal orientation.

In certain embodiments the removable batts are in contact with one or more support element and/or one or more connecting element.

In certain embodiments, the removable batts securable to the central support are not in direct contact with one another. Direct contact as understood herein means that any part of the removable batt is not touching any part of a further removable batt. Preferably, there are gaps between the removable batts when they are secured onto the central support. The gaps between the removable batts allow for air circulation. The air circulation between the removable batts may lead to the object to be fired to have a higher thermal shock resistance.

In certain embodiments the removable batts are rectangular in shape or essentially rectangular in shape, having a width to height ratio of about 1:18, or about 1:16, or about 1:14, or about 1:12, or about 1:10, or about 1:8, or about 1:6, or about 1:4, or about 1:2. For example the width of the removable batts may be about 100 mm, or about 150 mm, or about 200 mm, or about 250 mm, or about 300 mm, or about 350 mm. For example, the height of the removable batts may be about 600 mm, or about 700 mm, or about 800 mm, or about 900 mm, or about 1000 mm, or about 1100 mm, or about 1200 mm, or about 1300 mm, or about 1400 mm, or about 1500 mm. In certain embodiments, the removable batt may have a thickness of about 7 mm, or about 10 mm, or about 12 mm, or about 15 mm, or about 17 mm, or about 20 mm, or about 22 mm, or about 25 mm, or about 27 mm, or about 30 mm, or about 32 mm, or about 35 mm, or about 37 mm, or about 40 mm. The thickness of the removable batt may be dependent on the materials used for the removable batt.

In certain embodiments, the thickness of the removable batts is reduced at the short ends. A reduced width at the short ends allows for the batts to be slotting into one or more profile beams attached to the central support.

A ceramic assembly comprises one or more removable batts. Where more than one removable batts makes up the ceramic assembly, the removable batts may be of different sizes.

In certain embodiments the removable batts are securable to the central support using ceramic screws, nuts, bolts, ceramic glue or a combination thereof. In certain embodiments, the removable batts are securable to the central support using a locking engagement involving profile beams. In certain embodiments the profile beam is selected from an H-profile beam, a U-profile beam, an I-profile beam, an L-profile beam or a combination thereof.

A profile beam according to some embodiments of the present invention can be a beam which has a constant cross-section. An H-profile beam has a cross section that is H-shaped, a U-profile beam has a cross section that is U-shaped, An I-profile beam has a cross section that is I-shaped, an L-profile beam has a cross section that is L-shaped.

In certain embodiments, the removable batts may be attached to the central support with the aid of two profile beams in a horizontal orientation. One profile beam is positioned on the top of the central support and one profile beam is positioned at the bottom of the central support, above the feet. The profile beams may be secured to the central support using ceramic screws, nuts, bolts, ceramic glue or a combination thereof. The removable batts may then be slotted into the profile beams. As such, the removable batts are not rigidly secured to the central support and are able to move and expand freely enough to avoid cracks and breakages during the firing process. Such an arrangement allows for larger ceramic assemblies to be used to support larger objects.

In certain embodiments a ledge is attached to the bottom of the central support. The ledge may be perpendicular or essentially perpendicular to the central support. The ledge may have a width of about 7 mm, or about 10 mm, or about 12 mm, or about 15 mm, or about 17 mm, or about 20 mm, or about 22 mm, or about 25 mm, or about 27 mm, or about 30 mm, or about 32 mm, or about 35 mm, or about 37 mm, or about 40 mm. The ledge may have a total length of about 800 mm, or about 900 mm, or about 1000 mm, or about 1100 mm, or about 1200 mm, or about 1300 mm, or about 1400 mm, or about 1500 mm, or about 1600 mm, or about 1700 mm, or about 1800 mm, or about 1900 mm, or about 2000 mm, or about 2100 mm, or about 2200 mm, or about 2300 mm, or about 2400 mm, or about 2500 mm, or about 2600 mm. The ledge may be made up of a single piece. The ledge may be made up smaller pieces with gaps between the pieces across the total length of the ledge. The ledge may have a thickness of about 7 mm or about 10 mm, or about 12 mm, or about 15 mm, or about 17 mm, or about 20 mm, or about 22 mm, or about 25 mm, or about 27 mm, or about 30 mm, or about 32 mm, or about 35 mm, or about 37 mm, or about 40 mm.

In certain embodiments the object to be fired rests on the ledge and the removable batts. In certain embodiments, the ceramic assembly may support two objects to be fired. For example, the central support may be a symmetrical trapezoid or essentially symmetrical trapezoid. The width of the trapezoid at the bottom of the central support is greater than the width at the top of the central support. An object to be fired may be supported on either side of the ceramic assembly.

In certain embodiments the bridge is used to fit the lower profile beams. The bridge may be attached to the central support and/or profile beams using ceramic screws, nuts, bolts, ceramic glue or a combination thereof.

In certain embodiments, the ceramic assembly comprises one or more feet. In certain embodiments the ceramic assembly comprises two or three or four or five or six or seven or eight feet. In certain embodiments the feet are shaped to fit the central support, one or more profile beams, one more ledges and/or one or more bridges. In certain embodiments the feet are attached to the central support, one or more profile beams, one more ledges and/or one or more bridges using ceramic screws, nuts, bolts, ceramic glue or a combination thereof.

In certain embodiments, the parts of the ceramic assembly comprise ceramic materials selected from the list of cordierite, silicon carbide, mullite, aminosilicate, calcinated clay, chamotte, fused alumina, tabular alumina, magnesia-alumina spinell, kyanite andulusite, kaoline, zirconia, zirconiasilicate, fused cordierite, fused mullite and mixtures thereof. Different parts in the assembly may be made of different materials, such as to obtain a combination of materials. The materials may be selected on the basis of the specific requirements, such as intended thermal profile, maximum temperature, load mass, load materials, or load consistency, such as solid or particulate. The materials of the parts of the assembly may be further coated with a corrosion resistant material in order to improve corrosion resistance during use. In certain embodiments, the parts of the assembly comprise cordierite and/or silicon carbide.

During heating and cooling, various parts of the ceramic assembly and the object to be fired expand at different rates, due to differing thermal expansion coefficients of the various materials used. In case of an assembly made of rigidly interlocking parts, these differences in thermal expansion coefficients result in stresses formed at interfaces between the various parts, which causes friction and abrasions which reduce the lifetime and may lead to failure of the parts. In certain embodiments, parts of the ceramic assembly are not rigidly locked together. Due to this measure alone, the lifetime of the parts of the assembly according to the present invention may be considerably extended.

The various parts of the assembly may be either hollow extruded elements or solid (full) elements. A combination of hollow and solid elements may be used. Solid elements tend to have improved physical stability, while hollow elements tend to have improved thermal stability. For example, in the case of heavy load requirements, it may be advantageous to employ solid base elements in order to improve its strength. For materials that require rapid heating and cooling, hollow parts may be advantageous.

The reduction of the mass of the ceramic assembly for supporting objects to be fired in a kiln provides an improvement in energy ratio, leading to improved efficiency and therefore reduced cost and environmental impact. Furthermore, the ceramic assembly becomes even lighter due to the reduced weight of silicon carbide-based materials, as used in certain embodiments of the invention. Therefore, ceramic assemblies according the present invention have an improved energy ratio and thermal shock resistance.

The objects to be fired may comprise green body ceramic material. In certain embodiments the object to be fired may be a flat structure. In certain embodiments the object to be fired may be large with a surface measuring about 900 × 900 mm, or about 900 × 1200 mm, or about 900 × 1600 mm, or about 900 × 1800 mm. In certain embodiments the object to be fired may have a thickness of about 50 mm to about 200 mm. In certain embodiments, the object to be fired is a shower tray.

In certain embodiments the object to be fired is placed on the ceramic assembly in contact with one or more removable batts. In certain embodiments the object to be fired is resting on the ledge.

In certain embodiments, the ceramic assembly may have one or more of the following effects:
- decreased weight;
- improved energy ratio;
- improved efficiency;
- improved shock resistance;
- improved flexibility in the size of the assembly;
- parts of the assembly that can be recycled.

### EXAMPLES

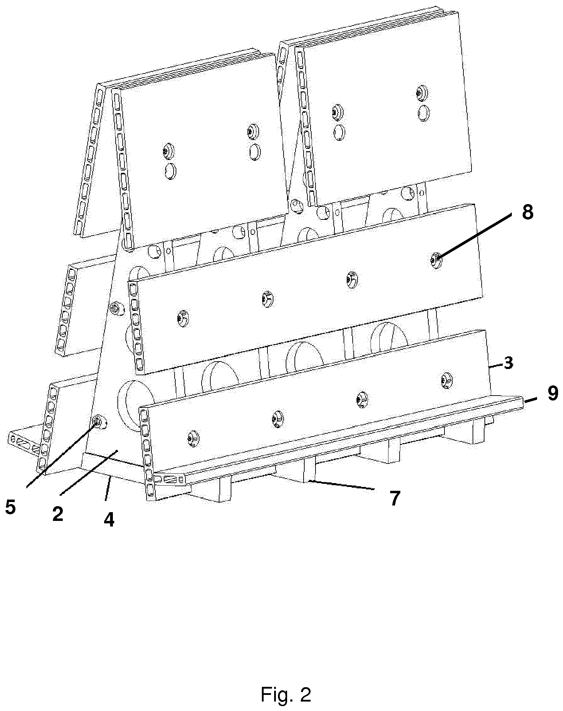

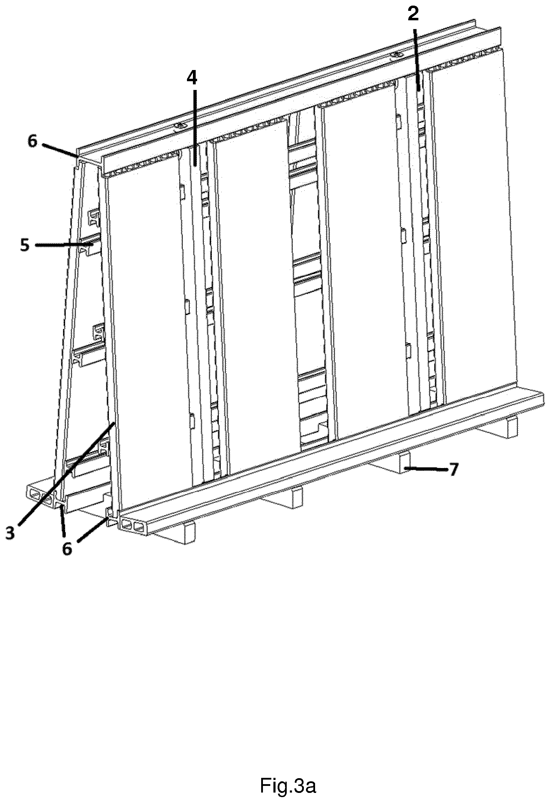

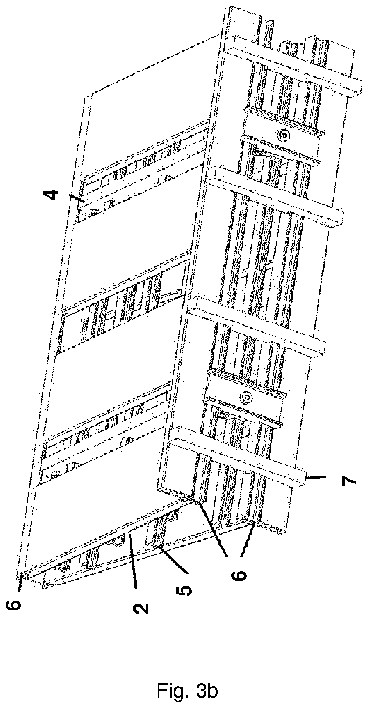

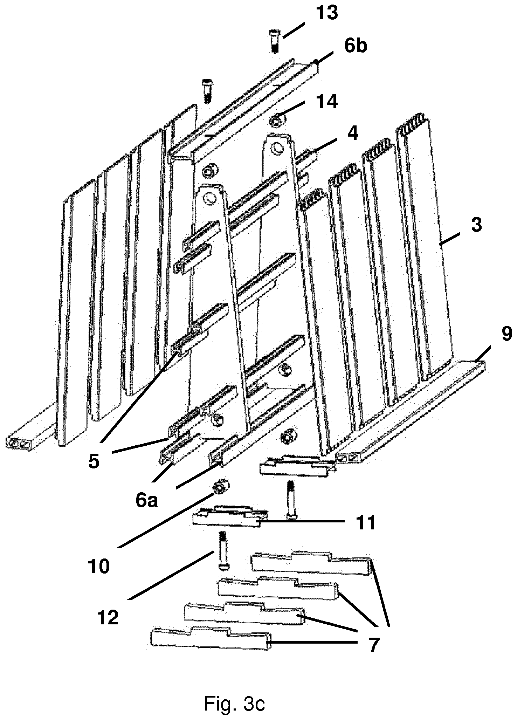

Figs. 2 and 3a-c show examples of ceramic assemblies for supporting objects to be fired in a kiln, each comprising a central support (2) and one or more removable batts (3) securable onto the central support. Hereinafter the structure of Fig. 2 will be referred to as "the first ceramic assembly" and the structure of Figs. 3a-c will be referred to as "the second ceramic assembly".

As may be seen from Fig. 2, the central support (2) of the first ceramic assembly comprises four support elements (4), secured by connecting elements (5). The removable batts (3) are secured onto the central support using ceramic nuts and bolts (8). Along the bottom of the ceramic assembly is a ledge (9) to support the object to be fired. Underneath the ledge (9) are feet (7) to support the ceramic assembly.

As may be seen from Figs. 3a-3c, the central support (2) of the second ceramic assembly comprises two support elements (4), secured by connecting elements (5), which are H-profile beams. The removable batts (3) are secured to the central support (2) with the aid of H-profile beams (6) by a locking engagement. This locking allows free movement of the removable batts, which can slide in the rails of the H-profile beams (6).

As may be seen from Figs. 3a-3c, feet (7) are used to support the structure. On the feet (7) are two H-profile beams (6a), which are positioned according to the shoulder of the feet. The feet also support two ledges (9). The lower H-profile beams (6a) support the central support (2). The lower H-profile beams (6a) fit the shape of the bottom of the central support (2) and the upper H-profile beams (6b) fit the shape of the top of the central support (2).

The central support (2) contains holes for the connecting elements (5), which in this example are H-profile beams. The central support (2) also contains holes for the nuts (10 and 14). The central support (2) is secured to the lower H-profile beams (6a) by a bridge (11), which is secured using ceramic bolts (12) and nuts (10). The shape of the bridge (11) fits the shape of the lower H-profile beam (6a). The upper H-profile beam (6b) connects the top of the central support by means of ceramic bolts (13) and nuts (14).

The central support (2), by means of two support elements (4) and several connecting elements (5) stabilises the structure to enable the removable batts (3) to be supported.

The removable batts (3) are inserted between the lower H-profile beam (6a) and the upper H-profile beam (6b). The thickness of the removable batts (3) is reduced at the shorter ends to allow the batts to be secured under the flange of the H-profile beams. The flange of the H-profile beams (6) lock the removable batts (3) in position. In this example, the connecting elements (5), the H-profile beams (6), the bridge (11) and the bolts and nuts (10, 12, 13 and 14) are made from silicon carbide, the rest of the assembly is made from cordierite.

### REFERENCE SIGNS

- 1: Ceramic assembly
- 2: Central support
- 3: Removable batt
- 4: Support element
- 5: Connecting element
- 6: Profile beam
- 7: Foot
- 8: Bolt
- 9: Ledge
- 10: Nuts
- 11: Bridge
- 12: Bolt
- 13: Bolt
- 14: Nut

## Claims

1. A ceramic assembly (1) for supporting objects to be fired in a kiln comprising:
- a central support (2); and
- one or more removable batts (3) securable onto the central support (2),
wherein the central support (2) comprises support elements (4) and connecting elements (5), wherein the support element (4) is a trapezoid shape and wherein the connecting elements (5) comprise elongated elements, such as bars.

2. The ceramic assembly (1) of any preceding claim, wherein the removable batts (3) are rectangular.

3. The ceramic assembly (1) of any preceding claim, wherein the removable batts (3) are securable to the central support (2) in a horizontal orientation or in a vertical orientation.

4. The ceramic assembly (1) of any preceding claim, wherein the removable batts (3) are securable to the central support (2) using ceramic screws, nuts, bolts, ceramic glue or combinations thereof.

5. The ceramic assembly (1) of any preceding claim, wherein the removable batts (3) are secured to the central support (2) in a vertical orientation.

6. The ceramic assembly (1) according to claim 5, wherein the removable batts (3) are securable to the central support using profile beams (6) and wherein the profile beams (6) are in a horizontal orientation.

7. The ceramic assembly (1) according to claim 6, wherein the removable batts (3) are securable to the central support (2) using one or more profile beams (6) at the top and/or at the bottom of the central support.

8. The ceramic assembly (1) according to claim 6 or claim 7, wherein the removable batts (3) are able to slide along the profile beams (6) and/or wherein two or more removable batts (3) are securable onto the central support (2) the removable batts (3) are not in direct contact with one another.

9. The ceramic assembly (1) according to any preceding claim, wherein the parts of the assembly comprise cordierite and/or silicon carbide.

10. The ceramic assembly (1) of any preceding claim, wherein the object to be fired is a shower tray.

11. Use of a ceramic assembly according to any one of the preceding claims in firing objects to be fired.

12. Method of formation of ceramic assembly for supporting objects to be fired in a kiln, comprising the steps of assembling a central support (2) and securing one or more removable batts (3) onto the central support (2) according to any one of claims 1 to 10.

13. Kit of parts for assembling a ceramic assembly (1) for supporting objects to be fired in a kiln comprising a central support (2) and one or more removable batts (3), and optionally profile beams (6) and/or feet (7) as defined in any one of claims 1 to 10.

## Patentansprüche

1. Keramikanordnung (1) zum Stützen von Gegenständen, die in einem Ofen gebrannt werden sollen, umfassend:
- eine mittige Stütze (2); und
- eine oder mehr abnehmbare Platten (3), die an der mittigen Stütze (2) sicherbar sind,
wobei die mittige Stütze (2) Stützelemente (4) und Verbindungselemente (5) umfasst, wobei das Stützelement (4) trapezförmig ist, und wobei die Verbindungselemente (5) gestreckte Elemente, wie etwa Stangen, umfassen.

2. Keramikanordnung (1) nach dem vorhergehenden Anspruch, wobei die abnehmbaren Platten (3) rechteckig sind.

3. Keramikanordnung (1) nach einem der vorhergehenden Ansprüche, wobei die abnehmbaren Platten (3) in einer horizontalen Ausrichtung oder in einer vertikalen Ausrichtung an der mittigen Stütze (2) sicherbar sind.

4. Keramikanordnung (1) nach einem der vorhergehenden Ansprüche, wobei die abnehmbaren Platten (3) unter Benutzung von keramischen Schrauben, Muttern, Bolzen, keramischem Klebstoff oder Kombinationen davon an der mittigen Stütze (2) sicherbar sind.

5. Keramikanordnung (1) nach einem der vorhergehenden Ansprüche, wobei die abnehmbaren Platten (3) in einer vertikalen Ausrichtung an der mittigen Stütze (2) gesichert sind.

6. Keramikanordnung (1) nach Anspruch 5, wobei die abnehmbaren Platten (3) unter Benutzung von Profilträgern (6) an der mittigen Stütze sicherbar sind, und wobei die Profilträger (6) in einer horizontalen Ausrichtung vorliegen.

7. Keramikanordnung (1) nach Anspruch 6, wobei die abnehmbaren Platten (3) unter Benutzung von einem oder mehr Profilträgern (6) an der Oberseite und/oder an der Unterseite der mittigen Stütze an der mittigen Stütze (2) sicherbar sind.

8. Keramikanordnung (1) nach Anspruch 6 oder 7, wobei die abnehmbaren Platten (3) zum Gleiten entlang der Profilträger (6) imstande sind, und/oder wobei zwei oder mehr abnehmbare Platten (3) an der mittigen Stütze (2) sicherbar sind, wobei die abnehmbaren Platten (3) nicht in direktem Kontakt miteinander sind.

9. Keramikanordnung (1) nach einem der vorhergehenden Ansprüche, wobei die Teile der Anordnung Cordierit und/oder Siliciumcarbid umfassen.

10. Keramikanordnung (1) nach einem der vorhergehenden Ansprüche, wobei der Gegenstand, der gebrannt werden soll, eine Duschwanne ist.

11. Gebrauch einer Keramikanordnung nach einem der vorhergehenden Ansprüche beim Brennen von Gegenständen, die gebrannt werden sollen.

12. Verfahren zur Ausbildung einer Keramikanordnung zum Stützen von Gegenständen, die in einem Ofen gebrannt werden sollen, umfassend die Schritte des Montierens einer mittigen Stütze (2) und des Sicherns von einer oder mehr abnehmbaren Platten (3) an der mittigen Stütze (2) nach einem der vorhergehenden Ansprüche 1 bis 10.

13. Kit von Teilen zum Montieren einer Keramikanordnung (1) zum Stützen von Gegenständen, die in einem Ofen gebrannt werden sollen, umfassend eine mittige Stütze (2) und eine oder mehr abnehmbare Platten (3), und optional Profilträger (6) und/oder Füße (7), nach einem der Ansprüche 1 bis 10.

## Revendications

1. Ensemble de céramique (1) pour supporter des objets devant être cuits dans un four comprenant :
- un support central (2) ; et
- un ou plusieurs panneaux amovibles (3) pouvant être fixés sur le support central (2),
dans lequel le support central (2) comprend des éléments de support (4) et des éléments de connexion (5), dans lequel l'élément de support (4) est de forme trapézoïdale et dans lequel les éléments de connexion (5) comprennent des éléments allongés, tels que des barres.

2. Ensemble de céramique (1) selon l'une quelconque des revendications précédentes, dans lequel les panneaux amovibles (3) sont rectangulaires.

3. Ensemble de céramique (1) selon l'une quelconque des revendications précédentes, dans lequel les panneaux amovibles (3) peuvent être fixés au support central (2) dans une orientation horizontale ou dans une orientation verticale.

4. Ensemble de céramique (1) selon l'une quelconque des revendications précédentes, dans lequel les panneaux amovibles (3) peuvent être fixés au support central (2) à l'aide de vis, d'écrous, de boulons de céramique, de colle céramique ou de combinaisons de ceux-ci.

5. Ensemble de céramique (1) selon l'une quelconque des revendications précédentes, dans lequel les panneaux amovibles (3) sont fixés au support central (2) dans une orientation verticale.

6. Ensemble de céramique (1) selon la revendication 5, dans lequel les panneaux amovibles (3) peuvent être fixés au support central à l'aide de poutres profilées (6) et dans lequel les poutres profilées (6) sont dans une orientation horizontale.

7. Ensemble de céramique (1) selon la revendication 6, dans lequel les panneaux amovibles (3) peuvent être fixés au support central (2) en utilisant une ou plusieurs poutres profilées (6) en haut et/ou en bas du support central.

8. Ensemble de céramique (1) selon la revendication 6 ou la revendication 7, dans lequel les panneaux amovibles (3) sont capables de coulisser le long des poutres profilées (6) et/ou dans lequel deux panneaux amovibles ou plus (3) peuvent être fixés sur le support central (2), les panneaux amovibles (3) n'étant pas en contact direct les uns avec les autres.

9. Ensemble de céramique (1) selon l'une quelconque des revendications précédentes, dans lequel les pièces de l'ensemble comprennent de la cordiérite et/ou du carbure de silicium.

10. Ensemble de céramique (1) selon l'une quelconque des revendications précédentes, dans lequel l'objet à cuire est un receveur de douche.

11. Utilisation d'un ensemble de céramique selon l'une quelconque des revendications précédentes dans la cuisson d'objets à cuire.

12. Procédé de formation d'un ensemble de céramique pour supporter des objets à cuire dans un four, comprenant les étapes d'assemblage d'un support central (2) et de fixation d'un ou plusieurs panneaux amovibles (3) sur le support central (2) selon l'une quelconque des revendications 1 à 10.

13. Kit de pièces pour assembler un ensemble céramique (1) pour supporter des objets à cuire dans un four comprenant un support central (2) et un ou plusieurs panneaux amovibles (3), et facultativement des poutres profilées (6) et/ou des pieds (7) comme défini dans l'une quelconque des revendications 1 à 10.
